# EUROPÄISCHE PATENTSCHRIFT

(11) **EP 3 423 299 B1**
(45) Veröffentlichungstag und Bekanntmachung des Hinweises auf die Patenterteilung: **15.07.2020**
(21) Anmeldenummer: 17703684.5
(22) Anmeldetag: 30.01.2017
(51) Int. Cl.: B60J 5/04

(54) **ANORDNUNG MIT EINEM CRASHPROFIL UND EINEM LASTWEITERLEITUNGSELEMENT AN EINEM KRAFTFAHRZEUG, LASTWEITERLEITUNGSELEMENT SOWIE KRAFTFAHRZEUG ODER FAHRZEUGTÜR**
ARRANGEMENT WITH A CRASH PROFILE AND A LOAD TRANSMISSION ELEMENT ON A MOTOR VEHICLE, LOAD TRANSMISSION ELEMENT AND MOTOR VEHICLE OR VEHICLE DOOR
ENSEMBLE COMPRENANT UN PROFILÉ DE COLLISION ET UN ÉLÉMENT DE TRANSMISSION DE CHARGE SUR UN VÉHICULE À MOTEUR, ÉLÉMENT DE TRANSMISSION DE CHARGE ET VÉHICULE À MOTEUR OU PORTE DE VÉHICULE

(30) Priorität: 01.03.2016 DE 102016203339; 12.08.2016 DE 102016215114; 19.09.2016 DE 102016217847
(43) Veröffentlichungstag der Anmeldung: 09.01.2019
(73) Patentinhaber: Volkswagen Aktiengesellschaft, 38440 Wolfsburg (DE)
(72) Erfinder: HERTEN, Helge, 38102 Braunschweig (DE); HOHM, Volker, 38112 Braunschweig (DE); STRÖHLEIN, Tobias, 38110 Braunschweig (DE); BORNEMANN, Krino, 39326 Klein Ammensleben (DE); HÖRMANN, Philipp, 40883 Ratingen (DE)
(86) Internationale Anmeldenummer: PCT/EP2017/051917
(87) Internationale Veröffentlichungsnummer: WO 2017/148634

(56) Entgegenhaltungen:
- DE-A1- 4 240 416
- DE-A1-102015 208 779
- DE-U1- 9 302 344
- JP-A- 2015 016 738
- US-A- 4 293 160

## Beschreibung

Die Erfindung betrifft eine Karosserie-Seitenstruktur zur Übertragung von aus einem etwaigen Crashereignis resultierenden Kollisionskräften von einer Karosseriesäule zu einer anderen Karosseriesäule eines Kraftfahrzeugs nach dem Oberbegriff des Patentanspruchs 1 der Erfindung.

Die bei geringer Überdeckung im Frontalcrash (Small Overlap) stark erhöhte Krafteinleitung auf insbesondere die Vordertüren eines Kraftfahrzeugs kann zu einer Verformung derselben in Innenraumrichtung des Kraftfahrzeugs führen und somit einen Insassen stark gefährden. Um diesem nachteiligen Umstand zu begegnen ist es bekannt, die Kollisionskräfte über die A-Säule der Karosserie des Kraftfahrzeugs und weiter über eine zusätzlich vorgesehene hochsteife, insbesondere rohrförmige Geometrie, auch als Crashrohr bezeichnet, auf die B-Säule der Kraftfahrzeugkarosserie zu übertragen. Herkömmliche Konstruktionen bedingen ein Knicken dieses Rohres bei zu hoher Last, so dass keine weiteren Kräfte mehr übertragen werden können. Aus diesem Grunde werden Crashrohre immer steifer, also auch schwerer ausgelegt, um einem kritischen Kraftniveau zu entsprechen. Aktuelle Lösungen betreffen insoweit Crashrohre aus hoch- oder höchstfesten Stählen, die an die Türinnenteile der Fahrzeugtüren, insbesondere am Türinnenblech, mittels Punktschweißung fixiert sind und sich im Crashfall an Gegenblechen der A- und B-Säule abstützen. Neben Dachlängsträger und Schweller ist hierdurch ein dritter Lastpfad geschaffen, mittels dessen die aus einem Frontalcrash resultierende Aufprallenergie nach Fahrzeug-hinten übertragen wird. Um der Gewichtssteigerung jedoch entgegen zu wirken, ist es bekannt, die besagten metallenen Crashrohre zwar dünnwandiger auszubilden, jedoch zur Gewährleistung der erforderlichen Knicksteifigkeit in diesen einen sogenannten Formkörper anzuordnen. Der Formkörper kann gemäß DE 10 2014 218 774 A1 aus einem Kunststoff, einem Faserverbundwerkstoff oder aus einem Metall bestehen und als Hohlkörper ausgebildet sein. In der Praxis wurde gefunden, dass zur Darstellung des besagten dritten Lastpfades eine sichere Kontaktierung des Crashrohes an besagten Gegenblechen der A- und B-Säulen auch bei etwaiger crashbedingter Verformung derselben unabdingbar ist. Hier setzt die nachfolgend beschriebene Erfindung an.

Aus der DE 10 2014 207 060 A1 ist eine Karosserie-Seitenstruktur bekannt, bei der ein im Türinnenraum einer Fahrzeug-Seitentür angeordneter Längsträger (das heißt Türbrüstungsrohr) als ein Hohlprofilteil realisiert ist. Das in der Fahrzeuglängsrichtung betrachtet hintere Längsträger-Ende ist im Crashfall seitlich abgestützt, damit das hintere Längsträger-Ende im Crashfall nicht vorzeitig ausknickt. Der Längsträger weist an seiner crashabgewandten Seite eine Prallkontur auf, die im Frontalcrashfall mittelbar oder unmittelbar in kraftübertragender Verbindung mit einer Prallkontur der crashabgewandten Fahrzeugsäule gedrückt ist.

Aus der Offenlegungsschrift US 4,293,160 A ist eine gattungsgemäße Karosserie-Struktur bekannt, bei welcher Lastweiterleitungselemente in ein Hohlprofil eingeschraubt sind.

Aufgabe der Erfindung ist es, zum einen eine im Hinblick auf den Stand der Technik alternative Karosserie-Seitenstruktur zur Übertragung von aus einem etwaigen Crashereignis resultierenden Kollisionskräften von einem Karosserieteil zu einem anderen Karosserieteil des Kraftfahrzeugs und zum anderen ein Lastweiterleitungselement dazu zu schaffen, welche/s einfach in der Herstellung und kostengünstig ist und auch bei etwaiger Deformation zumindest eines der Karosserieteile den Lastpfad sicher und wirkungsvoll durch sichere Anbindung eines Crashprofils an zugeordnete Karosserieteile aufrecht erhält.

Die Erfindung geht von der Erkenntnis aus, dass insbesondere bei dünnwandigen Crashprofilen, wie beispielsweise bei den eingangs beschriebenen dünnwandigen Crashrohren die Gefahr besteht, dass diese zur Ausbildung des besagten dritten Lastpfades im Crashfall und insbesondere bei crashbedingter Verformung der zugeordneten Karosserieteile nicht immer ausreichend kontaktieren, um eine sichere Kraftweiterleitung zu gewährleisten und ein Knicken des Crashprofils bei zu hoher Last zu vermeiden.

Die gestellte Aufgabe wird demnach ausgehend von einer Karosserie-Seitenstruktur mit einem in einem Türinnenraum angeordneten Hohlprofil zur Übertragung von aus einem etwaigen Crashereignis resultierenden Kollisionskräften von einer vorderen Säule (A-Säule) zu einer hinteren Säule (B-Säule) eines Kraftfahrzeugs, wobei das Hohlprofil in Hauptfahrtrichtung verläuft, im Falle des besagten Crashereignisses auf Druck belastet und stirnseitig unter Vermittlung je eines Lastweiterleitungselements am betreffenden Karosserieteil abgestützt ist, gemäß dem kennzeichnenden Teil des Patentanspruches 1 gelöst, wobei das Lastweiterleitungselement einen Grundkörper sowie einen sich an denselben hohlprofilseitig anschließenden zapfenartigen Befestigungsabschnitt aufweist, wobei der zapfenartige Befestigungsabschnitt endseitig in das Hohlprofil eingesteckt ist.

Vermittels des besagten Lastweiterleitungselements ist vorteilhaft sozusagen ein Adapterelement geschaffen, welches definiert an die angrenzenden Strukturen, nämlich an das Crashprofil und an das jeweilige Karosserieteil angepasst oder anpassbar ist und so im Crashfall über das Crashprofil einen funktionssicheren Lastpfad von der einen zur anderen Karosseriesäule gewährleistet. Es ist demnach ein einziges, für eine Vielzahl von Kraftfahrzeugen einsetzbares Crashprofil bereitstellbar, welches mittels besagter Lastweiterleitungselemente an individuelle Strukturen der Fahrzeugsäulen bzw. Karosserieteile angepasst bzw. anpassbar ist, woraus insbesondere Kostenvorteile bei der Herstellung des Crashprofils und beim Material sowie Gewichtsvorteile resultieren.

Die Unteransprüche beschreiben bevorzugte Weiterbildungen oder Ausgestaltungen der Erfindung.

Bevorzugt ist an oder im Bereich der freien Stirnseite des Grundkörpers zumindest ein Fixier- und/oder Zentrierelement ausgebildet, um im Crashfall eine sichere Fixierung und/oder Zentrierung des betreffenden Lastweiterleitungselements am zugeordneten Karosserieteil bzw. an der Karosseriesäule zu bewirken. Das Fixier- und/oder Zentrierelement korrespondiert zumindest im Crashfall mit einer geeigneten Prallkontur am betreffenden Karosserieteil / Karosseriesäule. Das Fixier- und/oder Zentrierelement ist zumindest im Crashfall von der Prallkontur formschlüssig aufgenommen oder es ist infolge der wirkende Kräfte erst ein Aufnahmemittel durch beispielsweise Verformung einer Kontaktfläche des betreffenden Karosserieteils ausgebildet.

Mit anderen Worten weist das Lastweiterleitungselement ein in der Fahrzeuglängsrichtung abragendes Fixierelement auf, das mit der säulenseitigen Aufnahme der Prallkontur korrespondiert. Im Frontalcrashfall ist das Fixierelement in die Aufnahme einfahrbar, um ein seitliches Abgleiten der Fahrzeugtür bzw. des Längsträgers (Türbrüstungsrohrs) nach fahrzeugaußen zu verhindern. Bevorzugt ist das Fixierelement ist in Bezug zur Fahrzeuglängsrichtung am Grundkörper außermittig angeordnet. Besonders bevorzugt ist das Fixierelement in Bezug zur Längsachse des Lastweiterleitungselementes nach fahrzeuginnen versetzt. Dies verhindert wirkungsvoll ein Einknicken des Hohlprofils nach innen. Das Lastweiterleitungselement ist gegenüber dem Hohlprofil ein separates Bauteil und ist vom Hohlprofil unabhängig hergestellt und erst danach gefügt.

Eine besonders einfache und funktionssichere Ausführungsform der Erfindung ergibt sich dadurch, dass das jeweilige Lastweiterleitungselement einen Grundkörper aufweist, wobei der Grundkörper zum einen säulen- bzw. karosserieteilseitig eine freie Stirnseite aufweist, vermittels derer sich im Falle des besagten Crashereignisses der Grundkörper des Lastweiterleitungselements an der zugeordneten Fahrzeugsäule abstützt. Die Stirnseite verläuft bevorzugt senkrecht zur Längsachse des Lastweiterleitungselementes und weist bevorzugt eine Fläche auf, die frei von einer Umspritzung aus Kunststoff ist.

Zum anderen bildet das Lastweiterleitungselement hohlprofilseitig eine den Befestigungsabschnitt umgebende Prallfläche aus, vermittels derer der Grundkörper an einer Stirnfläche des Hohlprofils anliegt und sich im Falle des besagten Crashereignisses an derselben abstützt. Bevorzugt erstrecken sich dabei sowohl die Stirnflächen des Hohlprofils und die Prallfläche des Grundkörpers orthogonal zur Krafteinleitungsrichtung oder zum Verlauf des Hohlprofils. Mit anderen Worten ist die Prallfläche der Grundkörper vom Befestigungsabschnitt radial nach außen gerichtet. Besonders bevorzugt erstreckt sich auch die freie Stirnseite des Grundkörpers orthogonal zur Krafteinleitungsrichtung oder zum Verlauf des Hohlprofils. Dies hat den Vorteil, dass die Kollisionskräfte unmittelbar und ganzheitlich über die Lastweiterleitungselemente in das Hohlprofil bzw. das angrenzende Karosserieteil eingeleitet bzw. axial durch alle betreffenden angrenzenden Strukturen hindurchgeleitet werden können, wodurch nachteilige Momentenkräfte oder dgl., die zu einer Knickbelastung des Hohlprofils führen können, verhindert, zumindest jedoch wirkungsvoll gemindert sind. Weiter bevorzugt ist vorgesehen, dass der zapfenartige Befestigungsabschnitt infolge Presspassung im Hohlprofil gefügt ist. Eine Verklebung der Fügeflächen ist durch diese Maßnahme entbehrlich. Ferner ist durch diese Maßnahme vorteilhaft eine ungleichmäßige Lasteinleitung oder Momentenbeanspruchung im Bereich der Anbindungsstellen der Lastweiterleitungselemente am Hohlprofil, nämlich an den Enden desselben, verhindert. Darüber hinaus ist durch diese Maßnahme ein geräuschloses Verhalten der betreffenden Bauteile im Fahrbetrieb des Kraftfahrzeugs sichergestellt. Um das Fügen zu vereinfachen und zur Geräuschdämpfung kann das Lastweiterleitungselement zumindest im Bereich des zapfenartigen Befestigungsabschnitts eine Umspritzung aus einem Kunststoff aufweist.

Gemäß einer ersten bevorzugten Ausführungsvariante der Erfindung ist das jeweilige Lastweiterleitungselement durch ein Metall-Einsteck- oder Einlegeprofil gebildet, welches weiter bevorzugt aus einem Leichtmetall, insbesondere aus Aluminium oder einer Aluminiumlegierung besteht, woraus insbesondere Gewichtseinsparungen kombiniert mit einer hohen Verformungsfestigkeit resultieren. Das Lastweiterleitungselement kann durch ein im Querschnitt geschlossenes Hohlprofil oder durch ein Vollprofil gebildet sein. Die erstgenannte Alternative geht mit weiter erhöhter Gewichtseinsparung einher. Wie Versuche gezeigt haben, kann diese Alternative besonders bevorzugt weiter optimiert werden, indem das Lastweiterleitungselement zumindest im Bereich des Grundkörpers als Trägerstruktur ausgebildet ist, wobei die Träger in einem Winkel zur Fahrzeuglängsrichtung geneigt sind. Die Träger bilden dabei zwei äußere, gegenüberliegende Seitenflächen, die durch eine innenliegende Struktur in Form eines X verbunden sind. Dadurch wird eine besonders günstige Struktur geschaffen, die im Crash ohne zu brechen deformiert und sich an die Prallkontur der Karosseriesäule anpasst. Die Träger erstrecken sich über die gesamte Breite des Grundkörpers und bilden durch ihre Anordnung an den den Seitenflächen benachbarten Flächen Öffnungen aus. Mit anderen Worten bildet der Grundkörper eine geschlossene Rahmenstruktur aus, dessen Ecken durch ein im Rahmen innenliegendes X verbunden sind. Dabei sind die Zwickel, die zwischen dem Rahmen und dem X ausgebildet sind als Hohlräume ausgestaltet. An die Stirnseite ist das Fixierelement angeformt. Bevorzugt ist die Wandstärke für die Träger 2 bis 4 mm.

Vorteilhaft ist ein derartiges Lastweiterleitungselement nach einem an sich bekannten und kostengünstigen Strangpressverfahren hergestellt bzw. herstellbar. Um im Hinblick auf eine variable Materialwahl für das Hohlprofil unterschiedlichen materialabhängigen, thermische Längen- und/oder Volumenänderungen gerecht werden zu können, ist erfindungsgemäß vorgesehen, dass das Lastweiterleitungselement zumindest im Bereich des zapfenartigen Befestigungsabschnitts eine Umspritzung aus einem Kunststoff aufweist. Über die Wahl der Materialdicke der Kunststoff-Umspritzung ist besagte Presspassung bewirkt. Des Weiteren übernimmt die Kunststoff-Umspritzung den Ausgleich etwaiger herstellungsbedingter Toleranzen im Lastweiterleitungselement und Hohlprofil und schont das Hohlprofil vor Beschädigung beim Einbringen des zapfenartigen Befestigungsabschnittes des Lastweiterleitungselements in das Hohlprofil.

Gemäß einer zweiten bevorzugten Ausführungsvariante der Erfindung ist das Lastweiterleitungselement durch ein Einsteck- oder Einlegeprofil aus einem Kunststoff oder einem faserverstärkten Kunststoff, beispielsweise aus einem glasfaserverstärkten Polyamid, wie PA 66 gebildet. Um im Crashfall einer etwaige zu verzeichnenden crashbedingten Verformung des dem jeweiligen Lastweiterleitungselement zugeordneten Karosserieteils gerecht zu werden und auch bei besagter Verformung eine sichere Lastübertragung durch großflächigen Kontakt zwischen dem Lastweiterleitungselement und dem zugeordneten Karosserieteil zu gewährleisten, weist das Lastweiterleitungselement zumindest im Bereich des Grundkörpers eine Wabenstruktur auf, wobei die durch die Wabenstruktur gebildeten Hohlräume sich in Krafteinleitungsrichtung oder in Richtung des Verlaufs des Hohlprofils erstrecken. Ein derartiges Lastweiterleitungselement lässt sich äußerst einfach und kostengünstig nach einem Kunststoff-Spritzgießverfahren herstellen. Durch diese Maßnahme ist eine Anpassung der zum Karosserieteil weisenden Stirnseite des Grundkörpers an die sich durch Verformung bildende "neue" Oberflächenstruktur respektive Kontaktfläche des Karosserieteils ermöglicht, indem der Grundkörper sich stirnseitig entsprechend verformen kann. Es ist ausdrücklich hervorzuheben, dass es sich hier nicht um ein Deformationselement im eigentlichen Sinne zur Absorption von Kollisionskräften, sondern es sich hier primär um eine Gestaltsanpassung handelt. Es ist sozusagen eine integrierte Morphineigenschaft zu verzeichnen. Im Hinblick darauf kann es angezeigt sein und ist demgemäß durch die Erfindung mit erfasst, dass der Grundkörper lediglich lokal begrenzt, insbesondere im Bereich der freien Stirnseite besagte Verformungseigenschaft aufweist, die beispielsweise durch entsprechende Dimensionierung der die Wabenstruktur ausbildenden Stege eingestellt ist. Um eine noch gleichmäßigere Krafteinleitung in das Lastweiterleitungselement zu bewirken, kann die Wabenstruktur des Grundkörpers, eine zusätzliche Prallfläche ausbildend, karosserieteilseitig verschlossen ausgebildet sein. Diese Maßnahme geht jedoch im Hinblick auf das oben erwähnte Kunststoff-Spritzgießverfahren mit erhöhten Herstellungsaufwand einher, d. h., es wäre ein zusätzlicher Prozessschritt zum stirnseitigen Verschließen der Wabenstruktur erforderlich. Ungeachtet dessen ist durch diese Maßnahme die Wabenstruktur in der Anzahl der Waben minimierbar, woraus insbesondere Material- und Gewichtseinsparungen resultieren können.

Was das Hohlprofil bzw. Crashprofil anbelangt, ist dieses bevorzugt durch ein Rohr gebildet und besteht gemäß einer praxisnahen Ausführungsform weiter bevorzugt aus einem Kunststoff oder einem faserverstärkten Kunststoff. Die Erfindung beschränkt sich jedoch nicht auf den favorisierten Rohrquerschnitt, welches insbesondere ein Rundquerschnitt oder ein Polygonquerschnitt sein kann, sondern erfasst auch ein Hohlprofil in Form eines offenen Profils mit beispielsweise einem U-Profilquerschnitt.

Nachstehend wird die Erfindung anhand der in den Zeichnungen schematisch dargestellten Ausführungsbeispiele näher erläutert. Sie ist jedoch nicht auf diese beschränkt, sondern erfasst alle durch die Patentansprüche definierten Ausgestaltungen. Für die Zwecke der vorliegenden Beschreibung soll die übliche Fahrtrichtung eines Kraftfahrzeugs mit "-x" ("minus x"), die Richtung entgegen seiner üblichen Fahrtrichtung mit "+x" ("plus x"), ausgehend von der üblichen Fahrtrichtung (-x) die Richtung in der Horizontalen quer zur x-Richtung nach rechts gesehen mit "+y", ausgehend von der üblichen Fahrtrichtung (-x) die Richtung in der Horizontalen quer zur x-Richtung nach links gesehen mit "-y", die Richtung in der Vertikalen quer zur x-Richtung nach oben gesehen mit "+z", und die Richtung in der Vertikalen quer zur x-Richtung nach unten gesehen mit "-z" bezeichnet werden. Diese Bezeichnungsweise der Raumrichtungen in kartesischen Koordinaten entspricht dem in der Kraftfahrzeugindustrie allgemein verwendeten Koordinatensystem. Überdies können Begriffe wie "vorne", "hinten", "oben" "unten" sowie Begriffe mit ähnlichem Bedeutungsinhalt einschließlich der Begriffe "rechts" und "links" in der Weise verwendet sein, wie sie zur Richtungsbezeichnung an einem Kraftfahrzeug üblicherweise gebraucht werden. Es zeigen:
- Fig. 1: äußerst schematisch ein erfindungsgemäß ausgebildetes Kraftfahrzeug in einer Seitenansicht,
- Fig. 2: eine perspektivische Innenansicht eines Rohbaus einer vorderen Fahrzeugtür des Kraftfahrzeugs nach Fig. 1 mit einem Hohlprofil als Crashprofil sowie mit erfindungswesentlichen Lastweiterleitungselementen,
- Fig. 3a-f: Schnittdarstellungen einer erste Ausgestaltungsvariante der Lastweiterleitungselemente in verschiedenen Ausführungsformen derselben,
- Fig. 4: eine perspektivische Darstellung des Lastweiterleitungselements nach Fig. 3d unmittelbar vor dem Fügen mit dem Hohlprofil (Einzelheit "Z" nach Fig. 2),
- Fig. 5a: eine perspektivische Vorderansicht einer zweiten Ausgestaltungsvariante eines erfindungswesentlichen Lastweiterleitungselements,
- Fig. 5b: das Lastweiterleitungselement nach Fig. 5a in einer perspektivischen Rückansicht,
- Fig. 6a-d: das Lastweiterleitungselement nach Fig. 5a und 5b in Funktion zu fortgeschrittenen Zeitpunkten "t₀" bis "t₃", und
- Fig. 7: eine vorteilhafte Weiterbildung des Lastweiterleitungselement nach Fig. 5a und 5b in Funktion desselben (verformt),
- Fig. 8: in einer schematischen Schnittdarstellung eine Teilschnittansicht einer Karosserie-Seitenstruktur in Höhe eines Hohlprofils.

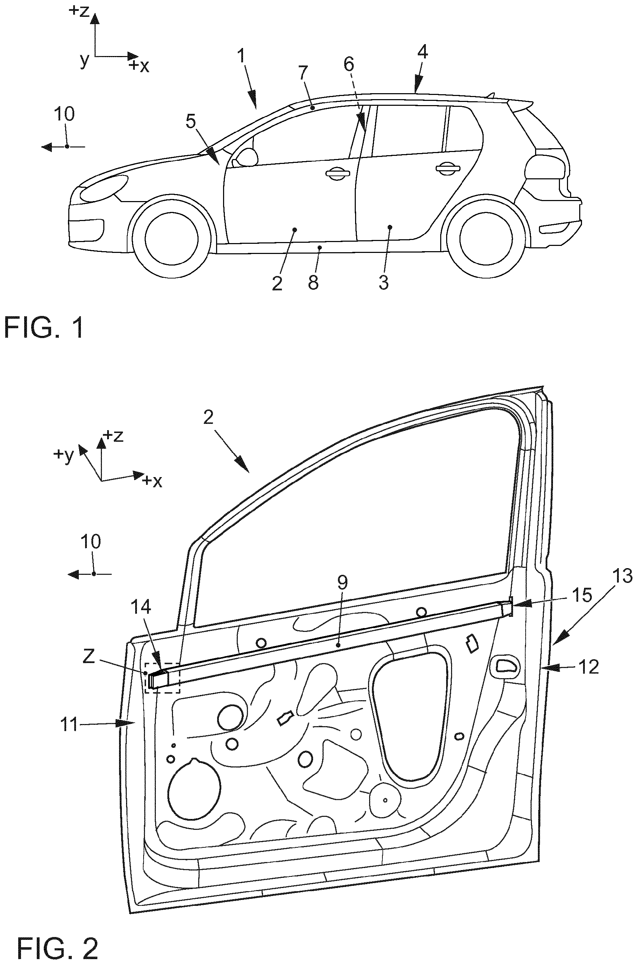

Fig. 1 zeigt zunächst ein Kraftfahrzeug 1 in einer Seitenansicht, vorliegend lediglich beispielgebend einen Personenkraftwagen, mit beidseitig je einer vorderen und einer hinteren Fahrzeugtür 2, 3. Die Erfindung wird nachfolgend weiter anhand einer vorderen Fahrzeugtür 2 beschrieben. Die besagte vordere Fahrzeugtür 2 ist in einer Karosserie-Seitenstruktur einer Fahrzeugkarosserie 4 angeordnet und nach Fahrzeug-vorn von einer A-Säule 5, und nach Fahrzeug-hinten von einer B-Säule 6 begrenzt. Die Fahrzeugtür 2 ist mittels nicht zeichnerisch dargestellter Scharniere um eine Hochachse (Z-Achse) schwenkbar an der B-Säule 5 angelenkt. Wie bereits einleitend dargetan, bilden die Dachlängsträger 7 und Schweller 8 des Kraftfahrzeugs 1 beidseitig desselben einen ersten und einen zweiten Lastpfad aus, um im Falle eines Frontal-Crashereignisses die Kollisionskräfte nach Fahrzeug-hinten zu leiten. Eine hintere Fahrzeugtür 3 ist entsprechend durch die Fahrzeugsäulen B und C begrenzt. Die B-Säule 6 ersetzt somit die A-Säule 5. Entsprechendes gilt für die C-Säule.

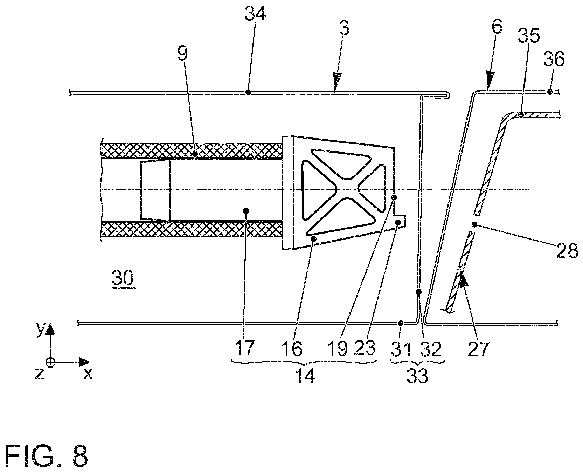

Im Hinblick auf Fig. 2 ist darüber hinaus beidseitig des Kraftfahrzeugs 1 mittels eines als Crashprofil fungierenden langgestreckten Hohlprofils 9 je ein dritter Lastpfad geschaffen. Wie aus der Fig. 2 und Fig. 8 weiter hervorgeht, ist im Türinnenraum 30 der Fahrzeugtür 2 ein Hohlprofil 9 als ein Tür-Längsträger angeordnet. Mit anderen Worten erstreckt sich das Hohlprofil 9 im Türinnenraum 30 im geschlossenen Zustand der Fahrzeugtür 2 im Wesentlichen in Hauptfahrrichtung 10 des Kraftfahrzeugs 1 respektive in Fahrzeuglängsrichtung (X-Richtung) zwischen den Tür-Stirnseiten 32 der Tragstruktur 13 der Fahrzeugtür 2. Der Türinnenraum 30 ist in der Fig. 8 durch ein schalenförmiges Türinnen-Blechteil 31 begrenzt der zusammen mit einer hinteren Tür-Stirnseite 32 eine Tür-Innenseite 33 definiert. Das Türinnen-Blechteil 31 ist durch ein fahrzeugäußeres Türaußen-Blechteil 34 überdeckt. Das Hohlprofil 9 erstreckt sich in etwa in horizontaler Ausrichtung und ist an nicht gezeigten Anbindungsstellen innerhalb der Fahrzeugtür 2 befestigt. Im weiteren Verlauf entlang der Fahrzeuglängsrichtung x nach hinten schließt sich an die Fahrzeugtür 2 mit einem Spaltabstand die B-Säule 6 mit einem darin (nur grob angedeuteten) positionierten Säulen-Verstärkungselement 35 an, das von einem Blechprofil 36 umschlossen ist. Im Falle des besagten Frontal-Crashereignisses stützt sich das Hohlprofil 9 axial einenends über die Tür-Stirnseite 32 und das Blechprofil 36 an der B-Säule 6 und anderenends an der A-Säule 5 ab und erlaubt so die Übertragung von Kollisionskräften von Fahrzeug-vorn nach Fahrzeug-hinten über diesen gebildeten dritten Lastpfad.

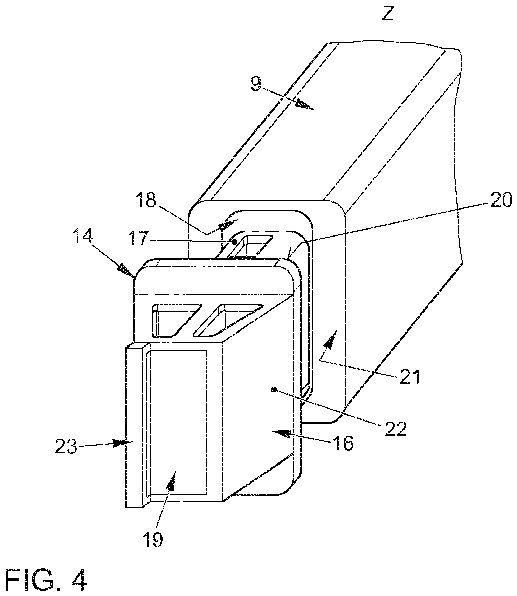

Das Hohlprofil 9 ist gemäß diesem Ausführungsbeispiel durch ein Rohr mit polygonalem respektive rechteckigem Rohrquerschnitt gebildet (vgl. insbes. Fig. 4) und besteht gemäß einer praxisnahen Ausführungsform aus einem Kunststoff oder einem faserverstärkten, beispielsweise glas- oder kohlenstofffaserverstärkten Kunststoff, bei dem die Fasern bzw. ein Faserhalbzeug in einer Kunststoffmatrix eingebettet ist. Die Erfindung beschränkt sich jedoch nicht auf den vorliegend gezeigten Rohrquerschnitt, sondern erfasst auch einen anderen polygonalen oder einen Rund- oder gerundeten Querschnitt. Darüber hinaus auch ein Hohlprofil mit einem offenen Profilquerschnitt, beispielsweise einem U-Profilquerschnitt, durch die Erfindung mit erfasst (nicht zeichnerisch dargestellt). Wie der Fig. 2 weiter zu entnehmen ist, weist das Hohlprofil 9 stirnseitig je ein Lastweiterleitungselement 14, 15 auf und ist demgemäß während des besagten Frontal-Crashereignisses unter Vermittlung dieser Lastweiterleitungselemente 14, 15 an der betreffenden Fahrzeugsäule 5, 6 abgestützt.

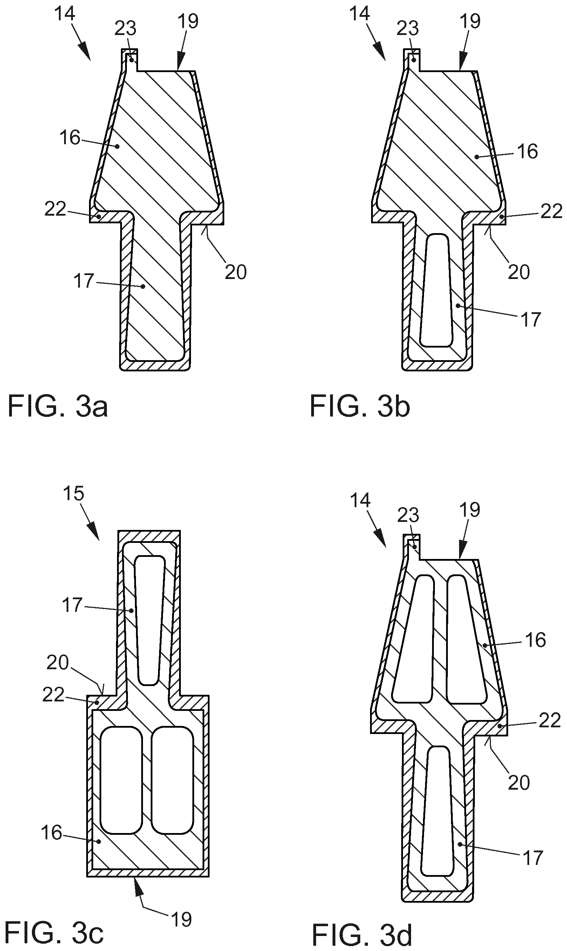

Die Fig. 3a bis 4 zeigen eine erste Ausgestaltungsvariante der Lastweiterleitungselemente 14, 15 in verschiedenen Ausführungsformen derselben. Gemäß diesem Ausführungsbeispiel handelt es sich in Fahrzeuglängsrichtung (X-Richtung) gesehen bei dem Lastweiterleitungselement 14 um ein Lastweiterleitungselement 14 das für vorne und hinten verwendet werden kann und bei dem Lastweiterleitungselement 15 um ein speziell für die B-Säule konzipiertes Lastweiterleitungselement 15.

Das jeweilige Lastweiterleitungselement 14, 15 weist einstückig einen Grundkörper 16 sowie einen sich an denselben hohlprofilseitig anschließenden zapfenartigen Befestigungsabschnitt 17 auf. Der Befestigungsabschnitt 17 ist im Hinblick auf Fig. 4 im Zusammenbau mit dem Hohlprofil 9 von diesem aufgenommen, indem während der Montage des Lastweiterleitungselements 14, 15 zur Aufnahme des Befestigungsabschnittes 17 das Lastweiterleitungselement 14, 15 mit seinem Befestigungsabschnitt 17 voran stirnseitig des Hohlprofils 9 in dessen axiale Öffnung 18 mit bevorzugt Presspassung gefügt respektive gesteckt wird. Ist demgegenüber ein offenes Profil (Hohlprofil 9) vorgesehen, kann das Lastweiterleitungselement 14, 15 mit seinem Befestigungsabschnitt 17 auch von der Seite in dasselbe bevorzugt mit Presspassung eingelegt sein (nicht zeichnerisch dargestellt). Weiter bevorzugt weist der Befestigungsabschnitt 17 einen zum Querschnitt der besagten Öffnung 18 formkomplementären Querschnitt, gemäß diesem Ausführungsbeispiel einen Rechteckquerschnitt auf.

Der Grundkörper 16 eines jeden Lastweiterleitungselements 14, 15 weist karosserieteilseitig eine freie Stirnseite 19 auf, vermittels derer im Falle des besagten Crashereignisses sich der Grundkörper 16 am dem jeweiligen Lastweiterleitungselement 14, 15 zugeordneten Karosseriesäule 5, 6 mittelbar über einen zugeordneten Seitenabschnitt 11, 12 der Tragstruktur 13 der Fahrzeugtür 2 oder unmittelbar abstützt. Hohlprofilseitig bildet der Grundkörper 16 eine den Befestigungsabschnitt 17 umgebende Prallfläche 20 aus, vermittels derer der Grundkörper 16 an einer Stirnfläche 21 des Hohlprofils 9 anliegt und sich im Falle des besagten Crashereignisses an derselben abstützt. Gemäß diesem Ausführungsbeispiel erstrecken sich sowohl die Stirnflächen 21 des Hohlprofils 9 als auch die freie Stirnseite 19 und die Prallfläche 20 des Grundkörpers 16 orthogonal zur Krafteinleitungsrichtung, welche idealisiert dem Verlauf des Hohlprofils 9, vorliegend in Fahrzeuglängsrichtung (X-Richtung) entspricht.

Gemäß dieser ersten Ausführungsvariante der Lastweiterleitungselemente 14, 15 sind dieselben bevorzugt jeweils durch ein Metall-Einsteckprofil gebildet, welches weiter bevorzugt aus einem Leichtmetall, insbesondere aus Aluminium oder einer Aluminiumlegierung besteht, woraus insbesondere Gewichtseinsparungen kombiniert mit einer hohen Verformungsfestigkeit resultieren. Das Lastweiterleitungselement 14, 15 kann durch ein im Querschnitt geschlossenes Hohlprofil mit zumindest einer Lochung (vgl. insbes. Fig. 3b-4) oder durch ein Vollprofil (vgl. insbes. Fig. 3a) gebildet sein. Die erstgenannte Alternative geht mit weiter erhöhter Gewichtseinsparung einher. Vorteilhaft ist ein derartiges Lastweiterleitungselement 14, 15 nach einem an sich bekannten und kostengünstigen Strangpressverfahren hergestellt bzw. herstellbar.

Um im Hinblick auf eine variable Materialwahl für das Hohlprofil unterschiedlichen materialabhängigen, thermische Längen- und/oder Volumenänderungen gerecht werden zu können, ist bevorzugt vorgesehen, dass das Lastweiterleitungselement 14, 15 zumindest im Bereich des zapfenartigen Befestigungsabschnitts 17, vorliegend im Bereich des gesamten Lastweiterleitungselements 14, 15 eine Umspritzung 22 aus einem Kunststoff, bevorzugt einem thermoplastischen Kunststoff, aufweist. Über die Wahl der Materialdicke der Kunststoff-Umspritzung 22 ist besagte Presspassung bewirkt. Des Weiteren übernimmt die Kunststoff-Umspritzung 22 auch den Ausgleich etwaiger herstellungsbedingter Toleranzen im Lastweiterleitungselement 14, 15 und Hohlprofil 9 und schont das Hohlprofil 9 vor Beschädigung beim Einbringen des zapfenartigen Befestigungsabschnittes 17 des Lastweiterleitungselements 14, 15 in das Hohlprofil.

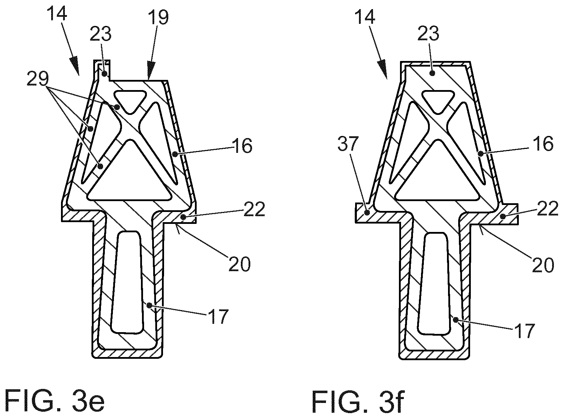

Wie den Fig. 3a, 3b, 3d, 3e, 3f und 4 weiter zu entnehmen ist, welche gemäß diesem Ausführungsbeispiel das vordere Lastweiterleitungselement 14 zeigen, ist an bzw. im Bereich der freien Stirnseite 19 des Grundkörpers 16 ein stegartiges Fixier- und/oder Zentrierelement 23 ausgebildet, um im Crashfall eine sichere Fixierung und/oder Zentrierung des betreffenden Lastweiterleitungselements 14 an der zugeordneten Karosseriesäule 5 zu bewirken. Dieses Fixier- und/oder Zentrierelement 23 korrespondiert zumindest im Crashfall mit einer in Fig. 8 dargestellten Aufnahme 28 als Bolzenöffnung an der betreffenden Karosseriesäule 5 und ist von demselben formschlüssig aufgenommen. Die Aufnahme 28 kann beispielsweise durch eine zum Fixier- und/oder Zentrierelement 23 formkomplementäre Eindellung bzw. Ausnehmung in dem Säulenverstärkungselement 35 der Karosseriesäule 5, 6 gebildet sein. Weiterhin kann auch vorgesehen sein und ist demgemäß durch die Erfindung ebenfalls mit erfasst, dass infolge der wirkende Kräfte in die Tür-Stirnseite 32 und das Blechprofil 36 erst eine derartige Bolzenöffnung durch beispielsweise Austanzen einer Kontaktfläche der betreffenden Karosseriesäule 5, 6 bzw. Fahrzeugtür 2, 3 ausgebildet wird, welche beispielsweise durch eine Materialschwächung im relevanten Bereich der Tür-Stirnseite 32 und des Blechprofil 36 bewirkt werden kann. Die Bolzenöffnung in der Tür-Stirnseite 32 und dem Blechprofil 36 stellt aber keine Aufnahme 28 im eigentlichen Sinne dar, da die Blechstärke und die Blechfestigkeit der Tür-Stirnseite 32 und des Blechprofils 36 zu gering sind.

Die Figuren 3a, 3b, 3d und 3e zeigen sukzessive eine stetig verbesserte Gewichtsoptimierung des Lastweiterleitungselementes 14. Die Figuren 3e und 3f zeigen dasselbe Bauteil in unterschiedlichen Schnitten. Die Figur 3e zeigt das Lastweiterleitungselement 14 nach Einbau in das Kraftfahrzeug 1 gemäß Figur 8 in einem Schnitt in einer horizontalen Ebene bzw. in der x-y Ebene. Die Figur 3f zeigt das Lastweiterleitungselement 14 nach Einbau in das Kraftfahrzeug 1 gemäß Figur 8 in einem Schnitt in einer vertikalen Ebene bzw. in der x-z Ebene. Wie in der Fig. 3f zu erkennen weist das Lastweiterleitungselement 14 an der Prallfläche 20 einen nach außen gerichteten Kragen 37 auf. Der Kragen 37 ist vollständig aus Kunststoff und ist Bestandteil der Umspritzung 22. Der Kragen 37 ragt senkrecht zur Längsachse des Lastweiterleitungselementes 14, die in Einbaulage des Lastweiterleitungselementes 14 identisch mit der Längsachse des Hohlprofils 9 ist, über den Grundkörper 16 in der Art einer Rippe hinaus. Der Kragen 37 dient als ergänzende Fixierung des Hohlprofils 9 bei einer Crashbelastung. Wie in der Fig. 4 verallgemeinert gezeigt, haben auch die Ausführungen gemäß Figuren 3a, 3b, 3c und 3d einen Kragen 37. Der Einfachheit halber ist aber kein entsprechender Schnitt in der x-z Ebene dargestellt in der der Kragen 37 ersichtlich wäre.

Das Fixierelement 23 ist dabei, wie aus Fig. 8 erkennbar, außermittig zur Längsachse des Grundkörpers 16 und des Hohlprofils 9 angeordnet. Dabei ist das Fixierelement 23 bezogen auf die Längsachse zur Fahrzeugmitte verschoben. Weiterhin ist aus Fig. 8 erkennbar, dass das Hohlfprofil 9 in einem Türinnenraum 30 angeordnet ist. Die Umspritzung 22 des Lastweiterleitungselementes 15 ist in der Fig. 8 der Einfachheit halber weggelassen worden.

Wie aus der Fig. 8 weiter hervorgeht, weist die säulenseitige Prallkontur 27 eine Aufnahme 28 auf, in die das Fixierelement 23 des Lastweiterleitungselementes 14, 15 im Frontalcrashfall einfahrbar ist, um ein seitliches Abgleiten der Fahrzeugtür 2 nach fahrzeugaußen zu verhindern. Konkret ist die Aufnahme 28 als Bolzenöffnung im Säulenverstärkungselement 35 ausgebildet in die das Fixierelement 23 in der Art eines Bolzens im Crash eingreift. Gemäß der Fig. 8 ist die säulenseitige Prallkontur 27 eine im Querschnittsprofil schräg gestellte Seitenflanke des U-profilförmigen Säulen-Verstärkungselementes 35.

Nachfolgend wird anhand der Fig. 8 die Funktionsweise des Lastweiterleitungselementes 14, 15 im Zusammenspiel mit der Aufnahme (Bolzenöffnung) 28 im Säulen-Verstärkungselement 35 beschrieben, und zwar bei einem Frontalcrash mit geringer seitlicher Überlappung. In diesem Fall erfolgt die Fahrzeugkollision mit geringer Überlappung in der Fahrzeugquerrichtung y seitlich außerhalb des entsprechenden Karosserie-Längsträgers, wodurch die Felge des Fahrzeug-Vorderrads (Fig. 1) gegen die A-Säule 5 gedrückt wird. Im weiteren Crashverlauf kommen das Lastweiterleitungselement 14, 15 der Fahrzeugtür 2 und die im zugewandte Prallkontur 27 der B-Säule 6 in eine kraftübertragende Verbindung, wodurch sich ein seitlicher Lastpfad ergibt, entlang dem die Kollisionskräfte über das Hohlprofil 9 zur B-Säule 6 übertragen werden.

Wie aus der Fig. 8 hervorgeht, durchbricht das Fixierelement 23 im Crashverlauf sowohl die hintere Tür-Stirnseite 32 als auch das äußere Blechprofil 36 der B-Säule 6 und fährt das Fixierelement 23 in die Aufnahme 28 im Säulen-Verstärkungselement 35 ein. Das Lastweiterleitungselement 14, 15 sowie das Säulen-Verstärkungselementes 35 werden dabei unter Zwischenlage des Türinnen-Blechteils 31 und des äußeren Blechprofils 36 in die oben erwähnte kraftübertragende Verbindung gebracht, über die die Kollisionskräfte in die B-Säule 6 einleitbar sind.

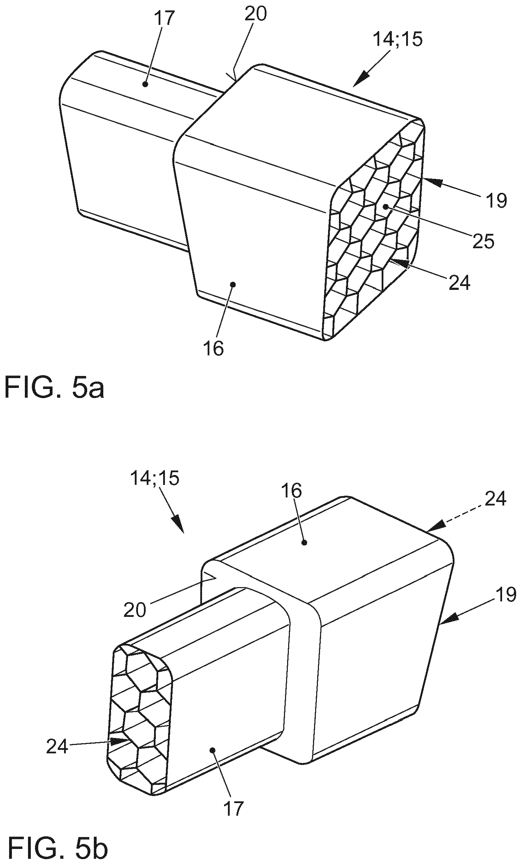

Die Fig. 3c zeigt ein spezielles Ausführungsbeispiel für eine hintere Fahrzeugtür 3. Das Ausführungsbeispiel unterschiedet sich von den anderen Beispielen in Fig. 3 durch den nicht konischen Verlauf des Grundkörpers 16 und daraus folgende breite Stirnseite 19. Daraus ergibt sich eine großflächige Ankopplung an das Säulen-Verstärkungselement 35. Dieses Merkmal weisen auch die in Fig. 5a bis 7 gezeigte zweite Ausgestaltungsvariante auf.

Die Fig. 5a bis 7 zeigen eine zweite Ausgestaltungsvariante der Lastweiterleitungselemente 14, 15. Diese zweite Ausgestaltungsvariante unterscheidet sich zur ersten Ausgestaltungsvariante zunächst dadurch, dass dieses als Einsteck- oder Einlegeprofil aus einem Kunststoff oder einem faserverstärkten Kunststoff, beispielsweise aus einem glas- oder kohlenstofffaserverstärkten Polyamid, wie PA 66 gebildet ist. Um im Crashfall einer etwaige zu verzeichnenden crashbedingten Verformung des dem jeweiligen Lastweiterleitungselement 14, 15 zugeordneten Karosseriesäule 5, 6 gerecht zu werden und auch bei besagter Verformung eine sichere Lastübertragung durch einen großflächigen Kontakt zwischen dem Lastweiterleitungselement 14, 15 und dem zugeordneten Karosseriesäule 5, 6 zu gewährleisten, weist das Lastweiterleitungselement 5, 6 zumindest im Bereich des Grundkörpers 16, vorliegend im gesamten Bereich des Lastweiterleitungselements 5, 6 eine Wabenstruktur 24 auf. Die durch die Wabenstruktur 24 gebildeten Hohlräume erstrecken sich in Krafteinleitungsrichtung bzw. in Richtung des Verlaufs des Hohlprofils 9.

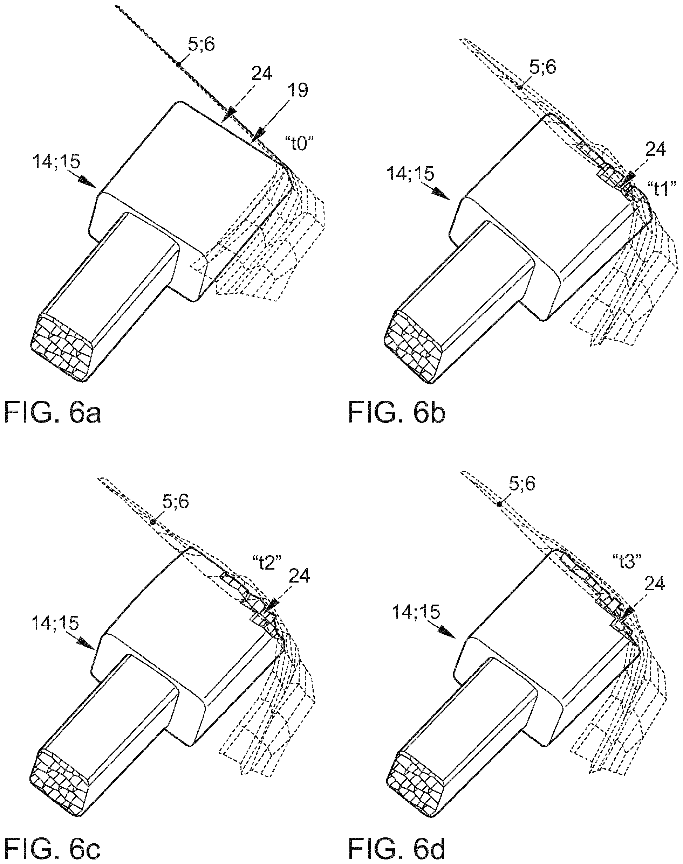

Durch diese Maßnahme ist eine Anpassung der zum Karosseriesäule 5, 6 weisenden Stirnseite 19 des Grundkörpers 16 an die sich durch Verformung bildende "neue" Oberflächenstruktur respektive Kontaktfläche des Karosseriesäule 5, 6 ermöglicht, indem sich der Grundkörper 16 des Lastweiterleitungselements 5, 6 sich stirnseitig entsprechend verformen kann. Die Fig. 6a bis 6d zeigen insoweit äußerst schematisch die stirnseitige Verformung des Grundkörpers 16 und Anpassung desselben an die sich durch Verformung verändernde Kontaktfläche des Karosseriesäule 5, 6 in einem Zeitraum "t₀" bis "t₃".

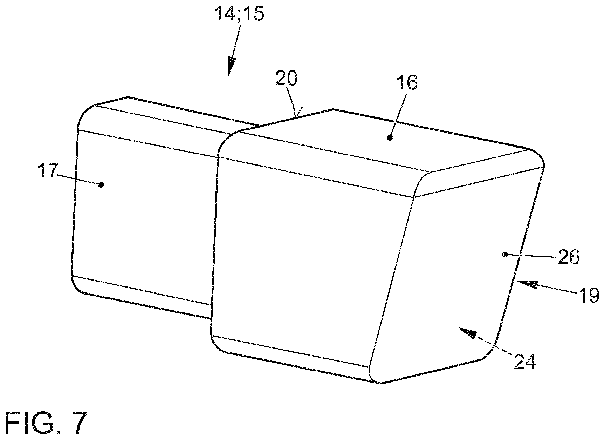

Es ist ausdrücklich hervorzuheben, dass es sich hier nicht um ein Deformationselement im eigentlichen Sinne zur Absorption von Kollisionskräften, sondern es sich hier primär um eine Gestaltsanpassung durch integrierte Morphineigenschaft handelt. Im Hinblick darauf kann es angezeigt sein und ist demgemäß durch die Erfindung mit erfasst, dass der Grundkörper 16 lediglich lokal begrenzt, insbesondere im Bereich der freien Stirnseite 19 besagte Verformungseigenschaft aufweist, die beispielsweise durch entsprechende Dimensionierung der die Wabenstruktur 24 ausbildenden Stege 25 (vgl. Fig. 5a) eingestellt ist. Um eine noch gleichmäßigere Krafteinleitung in das Lastweiterleitungselement 14, 15 zu bewirken, kann die Wabenstruktur 24 des Grundkörpers 16, eine zusätzliche Prallfläche 26 ausbildend, karosserieteilseitig verschlossen ausgebildet sein. Fig. 7 zeigt ein derart ausgebildetes Lastweiterleitungselement 14, 15 in Funktion, d. h., es hat bereits eine bestimmte Gestaltsanpassung an die kollisionsbedingte Verformung der Oberflächenstruktur respektive Kontaktfläche des hier der besseren Übersichtlichkeit nicht zeichnerisch dargestellten Karosseriesäule 5, 6 erfahren.

Was den Fügeprozess eines derart ausgebildeten Lastweiterleitungselements 14, 15 anbelangt, lehnt sich dieser an den zum ersten Ausgestaltungsvariante beschriebenen an. Grundsätzlich ist auch hier bevorzugt eine Presspassung vorgesehen. Diese kann unmittelbar durch Bearbeitung bzw. Ausbildung des Befestigungsabschnitts 17 oder ebenfalls durch eine Kunststoff-Umspritzung 22 (nicht zeichnerisch dargestellt) bewirkt sein. Was ein gemäß der ersten Ausgestaltungsvariante favorisierte Fixier- und/oder Zentrierelement 23 anbelangt, scheint dieses hier entbehrlich, kann jedoch dennoch aufgrund bestimmter Umstände vorgesehen sein/werden und ist demgemäß auch in diesem Fall durch die Erfindung mit erfasst (nicht zeichnerisch dargestellt).

Die vorstehend beschriebenen Ausführungsbeispiele stellen auf ein mit Lastweiterleitungselementen 14, 15 ausgestattetes Hohlprofil 9 als Crashprofil ab, welches besagten dritten Lastpfad ausbildend sich in Fahrzeuglängsrichtung (X-Richtung) erstreckt und innerhalb des Rohbaus einer vorderen Fahrzeugtür 2 angeordnet ist/wird. Die Erfindung beschränkt sich jedoch nicht auf dieses konkret beschriebene Ausführungsbeispiel, sondern erfasst auch ein entsprechendes Hohlprofil 9, welches innerhalb einer hinteren Fahrzeugtür 3 angeordnet ist (nicht zeichnerisch dargestellt). Darüber hinaus erfasst die Erfindung entsprechend ausgebildete Hohlprofile 9, welche als Crashprofile nicht in Fahrzeuglängsrichtung (X-Richtung), sondern in jeglicher anderen Richtung, insbesondere im Hinblick auf ein Seitencrashereignis auch in Fahrzeugquerrichtung (Y-Richtung) orientiert sind und bevorzugt außerhalb einer Fahrzeugtür 2, 3 an geeigneter Stelle in der Fahrzeugkarosserie 4 angebracht sind (nicht zeichnerisch dargestellt).

### Bezugszeichen liste

| | | | |
|---|---|---|---|
| 1 | Kraftfahrzeug | 31 | Türinnen-Blechteil |
| 2 | Fahrzeugtür | 32 | Tür-Stirnseite |
| 3 | Fahrzeugtür | 33 | Tür-Innenseite |
| 4 | Fahrzeugkarosserie | 34 | Türaußen-Blechteil |
| 5 | A-Säule | 35 | Säulen-Verstärkungselement |
| 6 | B-Säule | 36 | Blechprofil |
| 7 | Dachlängsträger | 37 | Kragen |
| 8 | Schweller | | |
| 9 | Hohlprofil | | |
| 10 | Hauptfahrtrichtung | | |
| 11 | Seitenabschnitt | | |
| 12 | Seitenabschnitt | | |
| 13 | Tragstruktur | | |
| 14 | Lastweiterleitungselement | | |
| 15 | Lastweiterleitungselement | | |
| 16 | Grundkörper | | |
| 17 | Befestigungsabschnitt | | |
| 18 | Öffnung | | |
| 19 | Stirnseite (Grundkörper 16) | | |
| 20 | Prallfläche (Grundkörper 16) | | |
| 21 | Stirnfläche (Hohlprofil 9) | | |
| 22 | Umspritzung | | |
| 23 | Fixier- und/oder Zentrierelement | | |
| 24 | Wabenstruktur | | |
| 25 | Steg | | |
| 26 | Prallfläche (Grundkörper 16) | | |
| 27 | Prallkontur | | |
| 28 | Aufnahme (Bolzenöffnung) | | |
| 29 | Träger | | |
| 30 | Türinnenraum | | |

## Patentansprüche

1. Karosserie-Seitenstruktur für ein Kraftfahrzeug (1), mit einer in der Fahrzeuglängsrichtung (x) zwischen Fahrzeugsäulen (5, 6) zugeordneten Fahrzeugtür (3), in deren Türinnenraum ein in der Fahrzeuglängsrichtung (x) verlaufendes Hohlprofil (9) angeordnet ist, das bei einem Frontalcrash zusammen mit der crashzugewandten Fahrzeugsäule (5) und der crashabgewandten Fahrzeugsäule (6) in der Fahrzeuglängsrichtung (x) einen Lastpfad bildet, mit dem Kollisionskräfte in Richtung auf das Fahrzeugheck übertragbar sind, wobei das Hohlprofil (9) an seiner crashabgewandten Seite und/oder crashzugewandten Seite ein Lastweiterleitungselement (14, 15) aufweist, das im Frontalcrashfall mittelbar oder unmittelbar in eine kraftüberragende Verbindung mit einer Prallkontur (27) der crashabgewandten Fahrzeugsäule (6) und/oder der crashzugewandten Fahrzeugsäule (5) gedrückt ist, wobei das Lastweiterleitungselement (14, 15) einen Grundkörper (16) sowie einen sich an denselben hohlprofilseitig anschließenden zapfenartigen Befestigungsabschnitt (17) aufweist, wobei der zapfenartige Befestigungsabschnitt (17) endseitig in das Hohlprofil (9) eingesteckt ist, **dadurch gekennzeichnet, dass** das Lastweiterleitungselement (14, 15) zumindest im Bereich des zapfenartigen Befestigungsabschnitts (17) eine Umspritzung (22) aus einem Kunststoff aufweist.

2. Karosserie-Seitenstruktur nach Anspruch 1, **dadurch gekennzeichnet, dass** der Grundkörper (16) karosserieteilseitig eine freie Stirnseite (19) aufweist, vermittels derer sich im Falle des Frontalcrashes der Grundkörper (16) des Lastweiterleitungselements (14, 15) an der zugeordneten Fahrzeugsäule (5, 6) abstützt.

3. Karosserie-Seitenstruktur nach Anspruch 2, **dadurch gekennzeichnet, dass** an oderim Bereich der freien Stirnseite (19) des Grundkörpers (16) zumindest ein Fixier- und/oder Zentrierelement (23) ausgebildet ist.

4. Karosserie-Seitenstruktur nach Anspruch 2 oder 3, **dadurch gekennzeichnet, dass** das Lastweiterleitungselement (14, 15) ein in der Fahrzeuglängsrichtung (x) abragendes Fixierelement (23) aufweist und die säulenseitige Prallkontur (27) eine korrespondierende Aufnahme (28) aufweist, und dass im Frontalcrashfall das Fixierelement (23) in die Aufnahme (28) einfahrbar ist, um ein seitliches Abgleiten der Fahrzeugtür (3) bzw. des Längsträgers (Türbrüstungsrohrs) nach fahrzeugaußen zu verhindern.

5. Karosserie-Seitenstruktur nach einem der vorhergehenden Ansprüche 3 oder 4, **dadurch gekennzeichnet, dass** das Fixierelement (23) in Bezug zur Fahrzeuglängsrichtung (x)am Grundkörper (16) außermittig angeordnet ist.

6. Karosserie-Seitenstruktur nach einem der vorhergehenden Ansprüche, **dadurch gekennzeichnet, dass** der Grundkörper (16) hohlprofilseitig eine vom Befestigungsabschnitt (17) radial nach außen gerichtete Prallfläche (20) ausbildet, vermittels derer der Grundkörper (16) zumindest im Falle des Frontalcrashes an einer Stirnfläche (21) des Hohlprofils (9) anliegt und sich im Falle des Frontalcrashes an derselben abstützt.

7. Karosserie-Seitenstruktur nach Anspruch 6, **dadurch gekennzeichnet, dass** sowohl die Stirnflächen (21) des Hohlprofils (9) als auch die freie Stirnseite (19) und die Prallfläche
(20) des Grundkörpers (16) sich orthogonal zur Krafteinleitungsrichtung oder zum Verlauf des Hohlprofils (9) erstrecken.

8. Karosserie-Seitenstruktur nach einem der vorhergehenden Ansprüche, **dadurch gekennzeichnet, dass** das Hohlprofil (9) ein faserverstärktes Kunststoffbauteil ist, und/oder das Lastweiterleitungselement (14, 15) ein Metall-Bauteil ist, das bevorzugt aus Aluminium oder einer Aluminiumlegierung besteht.

9. Karosserie-Seitenstruktur nach einem der Ansprüche 3 und 4, **dadurch gekennzeichnet, dass** der Grundkörper (16), der Befestigungsabschnitt (17) und das Fixier- und/oder Zentrierelement (23) des Lastweiterleitungselement (14, 15) einstückig als ein Abschnitt eines Strangpressprofiles ausgebildet ist.

10. Karosserie-Seitenstruktur nach einem der vorhergehenden Ansprüche 1 bis 9, **dadurch gekennzeichnet, dass** das Lastweiterleitungselement (15) zumindest im Bereich des Grundkörpers (16) eine Wabenstruktur (24) aufweist, wobei die durch die Wabenstruktur (24) gebildeten Hohlräume sich in Krafteinleitungsrichtung oder in Richtung des Verlaufs des Hohlprofils (9) erstrecken.

11. Karosserie-Seitenstruktur nach einem der vorhergehenden Ansprüche 1 bis 10, **dadurch gekennzeichnet, dass** das Lastweiterleitungselement (15) zumindest im Bereich des Grundkörpers (16) Träger (29) aufweist, wobei die Träger (29) in einem Winkel zur Fahrzeuglängsrichtung (x) geneigt sind.

12. Karosserie-Seitenstruktur nach Anspruch 11, **dadurch gekennzeichnet, dass** sich die Träger (29) über die gesamte Breite des Grundkörpers (16) erstrecken.

13. Karosserie-Seitenstruktur nach einem der Ansprüche 2 und 4, **dadurch gekennzeichnet, dass** das Fixier- und/oder Zentrierelement (23) und der Befestigungsabschnitt (17) in Bezug zur Fahrzeuglängsrichtung (x) am Grundkörper (16) gegenüberliegend angeordnet sind und mit dem Grundkörper (16) materialeinheitlich ausgebildet sind.

## Claims

1. Body side structure for a motor vehicle (1) with a vehicle door (3) which is assigned between vehicle pillars (5, 6) in the longitudinal direction (x) of the vehicle and in the door interior of which a hollow profile (9) is arranged which runs in the longitudinal direction (x) of the vehicle and, in the event of a head-on crash, forms a load path in the longitudinal direction (x) of the vehicle together with the vehicle pillar (5) facing the crash and the vehicle pillar (6) facing away from the crash, with which load path collision forces can be transmitted in the direction of the vehicle rear, wherein the hollow profile (9) has, on its side facing away from the crash and/or side facing the crash, a load transmission element (14, 15) which, in the event of a head-on crash, is pressed indirectly or directly into a force-transmitting connection with an impact contour (27) of the vehicle pillar (6) facing away from the crash and/or the vehicle pillar (5) facing the crash, wherein the load transmission element (14, 15) has a main body (16) and a pin-like fastening portion (17) adjoining the latter on the hollow profile side, wherein the pin-like fastening portion (17) is inserted on the end side into the hollow profile (19), **characterized in that** the load transmission element (14, 15) has an insert moulding (22) made from a plastic at least in the region of the pin-like fastening portion (17).

2. Body side structure according to Claim 1, **characterized in that** the main body (16) has, on the body part side, a free end side (19), by means of which, in the event of the head-on crash, the main body (16) of the load transmission element (14, 15) is supported on the associated vehicle pillar (5, 6).

3. Body side structure according to Claim 2, **characterized in that** at least one fixing and/or centring element (23) is formed at or in the region of the free end side (19) of the main body (16) .

4. Body side structure according to Claim 2 or 3, **characterized in that** the load transmission element (14, 15) has a fixing element (23) protruding in the longitudinal direction (x) of the vehicle, and the pillar-side impact contour (27) has a corresponding receptacle (28), and **in that**, in the event of a head-on crash, the fixing element (23) can be driven into the receptacle (28) in order to prevent a lateral sliding of the vehicle door (3) or of the longitudinal member (door windowsill tube) to the outside of the vehicle.

5. Body side structure according to either of the preceding Claims 3 and 4, **characterized in that** the fixing element (23) is arranged eccentrically on the main body (16) with respect to the longitudinal direction (x) of the vehicle.

6. Body side structure according to one of the preceding claims, **characterized in that** the main body (16) forms, on the hollow profile side, an impact surface (20) which is directed radially outwards from the fastening portion (17) and by means of which, at least in the event of the head-on crash, the main body (16) lies against an end surface (21) of the hollow profile (9) and is supported on said end surface in the event of the head-on crash.

7. Body side structure according to Claim 6, **characterized in that** the end surfaces (21) of the hollow profile (9) and the free end side (19) and the impact surface (20) of the main body (16) extend orthogonally to the force introduction direction or to the course of the hollow profile (9) .

8. Body side structure according to one of the preceding claims, **characterized in that** the hollow profile (9) is a fibre-reinforced plastics component, and/or the load transmission element (14, 15) is a metal component which is preferably composed of aluminium or an aluminium alloy.

9. Body side structure according to either of Claims 3 and 4, **characterized in that** the main body (16), the fastening portion (17) and the fixing and/or centring element (23) of the load transmission element (14, 15) are formed integrally as a portion of an extruded profile.

10. Body side structure according to one of the preceding Claims 1 to 9, **characterized in that** the load transmission element (15) has a honeycomb structure (24) at least in the region of the main body (16), wherein the cavities formed by the honeycomb structure (24) extend in the force introduction direction or in the direction of the course of the hollow profile (9).

11. Body side structure according to one of the preceding Claims 1 to 10, **characterized in that** the load transmission element (15) has supports (29) at least in the region of the main body (16), wherein the supports (29) are inclined at an angle to the longitudinal direction (x) of the vehicle.

12. Body side structure according to Claim 11, **characterized in that** the supports (29) extend over the entire width of the main body (16).

13. Body side structure according to either of Claims 2 and 4, **characterized in that** the fixing and/or centring element (23) and the fastening portion (17) are arranged oppositely on the main body (16) with respect to the longitudinal direction (x) of the vehicle and are formed from the same material as the main body (16).

## Revendications

1. Structure latérale de carrosserie pour un véhicule automobile (1), comprenant une porte de véhicule associée (3) entre des montants de véhicule (5, 6) dans la direction longitudinale du véhicule (x), porte dans l'espace intérieur de laquelle est disposé un profilé creux (9) s'étendant dans la direction longitudinale du véhicule (x), lequel profilé creux forme, dans le cas d'un impact frontal, conjointement avec le montant de véhicule (5) tourné vers l'impact et le montant de véhicule (6) opposé à l'impact, une voie de charge dans la direction longitudinale du véhicule (x), voie par laquelle des forces de collision peuvent être transmises en direction de l'arrière du véhicule, le profilé creux (9) comprenant, sur son côté opposé à l'impact et/ou sur son côté tourné vers l'impact, un élément de transfert de charge (14, 15) qui est, en cas d'impact frontal, pressé indirectement ou directement dans une liaison de transmission de force avec un contour de choc (27) du montant de véhicule (6) opposé à l'impact et/ou du montant de véhicule (5) tourné vers l'impact, l'élément de transfert de charge (14, 15) comprenant un corps de base (16) ainsi qu'une partie de fixation (17) de type goupille se raccordant à celui-ci du côté du profilé creux, la partie de fixation (17) de type goupille étant enfichée dans le profilé creux (9) du côté de son extrémité, **caractérisée en ce que** l'élément de transfert de charge (14, 15) comprend un surmoulage (22) en une matière synthétique au moins dans la région de la partie de fixation (17) de type goupille.

2. Structure latérale de carrosserie selon la revendication 1, **caractérisée en ce que** le corps de base (16) comprend un côté frontal libre (19) du côté de la partie de carrosserie, côté frontal au moyen duquel, en cas d'impact frontal, le corps de base (16) de l'élément de transfert de charge (14, 15) est supporté sur le montant de véhicule associé (5, 6).

3. Structure latérale de carrosserie selon la revendication 2, **caractérisée en ce qu'**au moins un élément de fixation et/ou de centrage (23) est réalisé sur ou dans la région du côté frontal libre (19) du corps de base (16).

4. Structure latérale de carrosserie selon la revendication 2 ou 3, **caractérisée en ce que** l'élément de transfert de charge (14, 15) comprend un élément de fixation (23) faisant saillie dans la direction longitudinale du véhicule (x) et le contour de choc (27) côté montant comprend un logement correspondant (28), et **en ce qu'**en cas d'impact frontal, l'élément de fixation (23) peut être rentré dans le logement (28), afin d'empêcher un glissement latéral de la porte de véhicule (3) ou du support longitudinal (tube d'appui de porte) vers l'extérieur du véhicule.

5. Structure latérale de carrosserie selon l'une des revendications précédentes 3 ou 4, **caractérisée en ce que** l'élément de fixation (23) est disposé de manière excentrique sur le corps de base (16) par rapport à la direction longitudinale du véhicule (x).

6. Structure latérale de carrosserie selon l'une des revendications précédentes, **caractérisée en ce que** le corps de base (16) forme, du côté du profilé creux, une surface de choc (20) orientée radialement vers l'extérieur à partir de la partie de fixation (17), surface au moyen de laquelle le corps de base (16) s'appuie contre une surface frontale (21) du profilé creux (9) au moins dans le cas de l'impact frontal, et est supporté sur celle-ci dans le cas de l'impact frontal.

7. Structure latérale de carrosserie selon la revendication 6, **caractérisée en ce qu'**à la fois les surfaces frontales (21) du corps profilé (9) et le côté frontal libre (19) et la surface de choc (20) du corps de base (16) s'étendent de manière orthogonale à la direction d'application de force ou à l'étendue du profilé creux (9).

8. Structure latérale de carrosserie selon l'une des revendications précédentes, **caractérisée en ce que** le profilé creux (9) est un composant en matière synthétique renforcé par des fibres, et/ou l'élément de transfert de charge (14, 15) est un composant métallique qui est constitué de préférence d'aluminium ou d'un alliage d'aluminium.

9. Structure latérale de carrosserie selon l'une des revendications 3 et 4, **caractérisée en ce que** le corps de base (16), la partie de fixation (17) et l'élément de fixation et/ou de centrage (23) de l'élément de transfert de charge (14, 15) sont réalisés d'une seule pièce comme partie d'un profilé extrudé.

10. Structure latérale de carrosserie selon l'une des revendications précédentes 1 à 9, **caractérisée en ce que** l'élément de transfert de charge (15) comprend une structure en nid d'abeilles (24) au moins dans la région du corps de base (16), les cavités formées par la structure en nid d'abeilles (24) s'étendant dans la direction d'application de force ou dans la direction de l'étendue du profilé creux (9).

11. Structure latérale de carrosserie selon l'une des revendications précédentes 1 à 10, **caractérisée en ce que** l'élément de transfert de charge (15) comprend des supports (29) au moins dans la région du corps de base (16), les supports (29) étant inclinés suivant un angle par rapport à la direction longitudinale du véhicule (x).

12. Structure latérale de carrosserie selon la revendication 11, **caractérisée en ce que** les supports (29) s'étendent sur toute la largeur du corps de base (16).

13. Structure latérale de carrosserie selon l'une des revendications 2 et 4, **caractérisée en ce que** l'élément de fixation et/ou de centrage (23) et la partie de fixation (17) sont disposés de manière opposée sur le corps de base (16) par rapport à la direction longitudinale du véhicule (x) et sont réalisés de manière venue de matière avec le corps de base (16).
